# EUROPÄISCHE PATENTANMELDUNG

(11) **EP 4 480 911 A1**
(43) Veröffentlichungstag der Anmeldung: **25.12.2024**
(21) Anmeldenummer: 23180842.9
(22) Anmeldetag: 22.06.2023
(51) Int. Cl.: C01B 32/19, B01J 19/10

(54) **VERFAHREN ZUR GEWINNUNG VON GRAPHENSUSPENSIONEN DURCH FLÜSSIGPHASEN-PEELING**

(71) Anmelder: 2D Innovation GmbH, 86161 Augsburg (DE)
(72) Erfinder: DEMIN, Evgeniy, 87657 Görisried (DE); DREWITZ, Oleg, 86316 Friedberg (DE)
(74) Vertreter: Jeck, Anton

(57) **Zusammenfassung**

Die Erfindung betrifft Verfahren zur Herstellung von Graphen und Graphensuspensionen bei der Erzeugung von Schall- und Ultraschallresonanzschwingungen in Fluidströmen unterschiedlicher Dichte und Viskosität. Infolgedessen kommt es zur Zerstörung der Van-der-Waals-Kräfte bei der Bildung graphenähnlicher Materialien in verschiedenen Dispersionsmedien. Diese Erfindung kann in verschiedenen Branchen und vor allem für die Schaffung neuer Verbundwerkstoffe, Energiewandler in alternativer Energie sowie Materialien für die Energie-, Bau- und andere Industriezweige eingesetzt werden.

## Beschreibung

Die Erfindung bezieht sich auf die Technologie von Kohlenstoffnanomaterialien, insbesondere auf die Technologie zur Herstellung von Graphen in Form von niedrigschichtigen und mehrschichtigen Graphenmaterialien. In der Beschreibung dieser Erfindung werden die folgenden Begriffe verwendet. "Graphen" bedeutet gemäß der in der Fachliteratur akzeptierten Terminologie ein Material in Form von Platten (Flocken) mit einer Quergröße in der Größenordnung von 1 - 100 Mikrometern und einer Dicke von 1 - 60 Graphenschichten (0,34 - 20 nm). Herkömmlicherweise werden Graphen-Nanoplättchen mit einer Dicke von bis zu 10 Schichten als Low-Layer-Graphen bezeichnet. Mehr als 10 Schichten werden als Multilayer-Graphen bezeichnet. Es gibt kein einheitliches Kriterium zur Unterscheidung zwischen Graphit und mehrschichtigem Graphen hinsichtlich der Dicke der Graphenpakete. In einigen wissenschaftlichen Veröffentlichungen werden mehrschichtige Graphenmaterialien als Graphit-Nanoplättchen bezeichnet, in anderen als Graphen-Nanoplättchen. Das Kriterium kann die positive Wirkung sein, die durch den Einsatz dieser Materialien in verschiedenen Bereichen erzielt wird. Für eine Reihe von Anwendungen ist der Formaspekt (das Verhältnis der Quergröße der Flocken zur Dicke) wichtiger als die absolute Dicke der Flocken.

Graphen ist eine einzelne Graphitebene, in der Kohlenstoffatome ein hexagonales Gitter bilden. Das zunehmende Interesse an Graphen ist mit einer Reihe seiner einzigartigen Eigenschaften verbunden: mechanische, elektronische, optische und andere.

Graphen selbst, das über einzigartige Eigenschaften verfügt, ist für bestimmte Branchen von Interesse, insbesondere für die Elektronik und Elektrotechnik. Der am weitesten verbreitete Einsatz graphenähnlicher Materialien, der sogenannten Wenigschicht- und Mehrschichtgraphene, wird in Form von Suspensionen oder Dispersionen in den erforderlichen Dispersionsmedien in Betracht gezogen, um Graphenformationen gleichmäßig in der Matrix zu verteilen. Als Matrix können verschiedene Arten von Kunststoffen, Verbundwerkstoffen, Polymeren, Metallen, Gummi, Bau-Beton usw. fungieren.

Bisher sind eine Reihe von Methoden zur Gewinnung von Graphen bekannt, von denen fünf Hauptmethoden unterschieden werden können:
1) mikromechanisches Peeling von Graphit;
2) Abblättern von Graphit in der flüssigen Phase;
3) Peeling von Graphit mit chemischen Methoden;
4) Wachstum von Graphen durch chemische Gasphasenabscheidung;
5) Wachstum von Graphen auf einem SiC-Substrat.

Allerdings sind alle diese aufgeführten Methoden zur Herstellung von Graphen langwierig, teuer und ineffizient. Die großtechnische Produktion graphenähnlicher Materialien steht derzeit erst am Anfang.

Die ersten beiden Methoden gelten als die produktivsten, diese Methoden können der Peeling-Methode zugeschrieben werden.

Die mechanische Exfoliation von Graphit ist die Methode, mit der erstmals einschichtiges Graphen isoliert wurde. Bei dieser im industriellen Maßstab nicht anwendbaren Methode werden die Graphitschichten mit Klebeband voneinander getrennt. Dadurch ist es möglich, hochwertiges Graphen mit großen Seitengrößen, aber in sehr kleinen Mengen zu erhalten.

Ein Beispiel für mechanisches Peeling ist ein Verfahren zur Herstellung von Graphenpartikeln oder -flocken durch Abreiben von festem Graphit gegen eine raue Oberfläche, beispielsweise eine Glasoberfläche mit einer Rauheit von 0,01 bis 10 µm. Bei der Reibung wird Graphit auf eine raue Oberfläche übertragen und hinterlässt Spuren, die ein Graphenmaterial darstellen. Anschließend wird die spezifizierte Oberfläche einer Ultraschallbehandlung unterzogen, um das Graphenmaterial von ihr zu trennen (WO 2011055039, Klasse B82Y 30/00, 2011).

Es gibt Möglichkeiten, Low-Layer-Graphen in speziellen Kugelmühlen zu gewinnen, zum Beispiel RU2648424C2.

Der Nachteil solcher technischen Lösungen ist die geringe Produktivität, da diese Verfahren eine ständige Unterbrechung des Prozesses erfordern, um die Graphenschichten von der Schleifoberfläche und den Schleifkörpern zu trennen.

Die direkte Exfoliation von Graphit kann in der flüssigen Phase durch Ultraschallbehandlung in einem geeigneten Lösungsmittel durchgeführt werden. Diese Methode hat verschiedene Vorteile: Sie ist möglicherweise leicht skalierbar, sodass es möglich ist, einschichtiges Graphen oder Graphen mit einer geringen Anzahl von Schichten in industriellen Mengen zu erhalten.

Die üblicherweise bei dieser Produktionsmethode vorhandenen Nachteile lassen sich wie folgt charakterisieren: geringe Ausbeute und Schwierigkeiten bei der Trennung oder Extraktion von Graphenschichten oder Graphen-Nanoplättchen aus der Lösung.

Insbesondere die Extraktion durch Filtration oder Zentrifugation führt zu einem gewissen Grad an Stapelung und Wiederzusammenbau der Graphenschichten, was die Wirksamkeit dieser Methode verringert. Darüber hinaus kann eine zu starke Beschallung dazu führen, dass die Seitenabmessungen der Schichten übermäßig verringert werden. Dadurch nimmt das Aspektverhältnis (Verhältnis zwischen Seitengröße und Dicke) ab.

Beispiele für solche Patente sind:
CN 103466612 beschreibt ein Verfahren zur Herstellung von Graphen aus Graphit unter Verwendung von zwei oder mehr Komponenten bei unterschiedlichen Ultraschallfrequenzen im Bereich von 20 bis 1000 kHz. Als Lösungsmittel kommen Wasser und Alkohole zum Einsatz, aber auch Lösungen anorganischer Säuren, Aldehyde, Ketone oder Kombinationen davon.

WO 2013/010211 beschreibt ein Verfahren zum Peeling eines Laminats (also nicht unbedingt Graphen) durch Ultraschallbehandlung in einem geeigneten Tensid.

CN 103112848 beschreibt ein Verfahren zur Herstellung von Graphen, das die Dispersion von Graphit in einer sauren wässrigen Lösung von Chitosan mittels Ultraschallbehandlung für 0,5 - 50 Stunden umfasst.

KR 20110077606 umfasst die Ultraschallbehandlung von Graphit in Propanol für 10 bis 20 Minuten, gefolgt von einer Zentrifugation bei 4500 - 5500 U/min, um nicht abgeblätterte Graphitpartikel zu entfernen.

WO 2008/060703 beschreibt ein Verfahren zur Herstellung von Nanostrukturen (Nanoröhren, Fullerene und Graphen-Nanoplättchen) durch Interkalation von Graphit mit Ameisen- oder Essigsäure, Wasser oder einer Kombination davon, gefolgt vom Inkontaktbringen der interkalierten Verbindung mit einer überkritischen Flüssigkeit und thermischer Exfoliation eine Temperatur von mindestens 1450 °C. Dabei wird interkalierter Graphit aus einem Inertgas in das Plasma eingebracht.

Der Nachteil der Interkalationsmethode ist die Verwendung nicht umweltfreundlicher Stoffe. Darüber hinaus entstehen bei diesem Prozess verschiedene Arten von Schwefelsäure- und Salpetersäureverbindungen sowohl in flüssiger als auch in gasförmiger Phase, was eine Reinigungsbehandlung erfordert. Ein weiterer Nachteil der Interkalation besteht darin, dass der Grad der Exfoliation bei diesem Verfahren schwer zu kontrollieren ist. Es ist auch nicht möglich, Graphen-Nanoplättchen mit nur wenigen Schichten zu erhalten.

Lotya M., Hernandez Y., King P.J., Smith R.J., Nicolosi V., Karlsson L.S., Blighe F.M., De S., Wang Z., McGovern I.T., Duesberg G.S., Coleman J.N. Flüssigphasenproduktion von Graphen durch Exfoliation von Graphit in Tensid-/Wasserlösungen//J. amer. Chem. soc. 2009, Bd. 131, S. 3611 - 3620 beschreibt ein Verfahren zur Herstellung von polydispersem Graphen Seite: 3 RU 2 657 504 C2 5 10 15 20 25 30 35 40 45 durch Ultraschalldispersion von kristallinem Graphit in einer wässrigen Lösung eines Tensids (Tensid, Natriumdodecylbenzolsulfonat, DDBS).In der anfänglichen Suspension wurde die Graphitkonzentration mit 0,1 g/l und die DDBS mit 0,5 g/l angenommen. Nach der Ultraschallbehandlung der Dispersion und der Abtrennung der groben Fraktion betrug die Konzentration des resultierenden Graphens etwa n*10 - 3...n*10 - 2 g/L. Graphen wurde in Form von Flocken gewonnen, die hauptsächlich aus 1...10 Graphen-Monoschichten mit einem Maximum in der Verteilung von etwa 5 Schichten bestanden.

Der Nachteil der betrachteten Methode besteht darin, dass Graphen in einer sehr geringen Konzentration anfällt und nur ein kleiner Teil des ursprünglichen Graphits in Graphen umgewandelt wird. Die Notwendigkeit, mit niedrigen Substanzkonzentrationen zu arbeiten, führt zu einem großen Volumen an verarbeiteten Lösungen, was die Produktkosten erhöht. Darüber hinaus wird das der Suspension während der Ultraschallbehandlung zugesetzte Tensid an Graphen adsorbiert, und die Tensidverunreinigung lässt sich dann nur schwer entfernen. Gleichzeitig ist das Vorhandensein von Tensidverunreinigungen im Produkt für viele Anwendungen unerwünscht.

Aufgrund zahlreicher wissenschaftlicher und experimenteller Arbeiten neigt die überwiegende Mehrheit der Fachleute zu der Annahme, dass der Hauptvorteil von Flüssigphasenverfahren zur Herstellung von Graphenen in der Möglichkeit des Einsatzes einer relativ einfachen Technologie liegt, die relativ einfach im industriellen Maßstab umzusetzen ist. Die resultierenden Suspensionen von Graphen und seinen Derivaten, hauptsächlich niedrigschichtige Graphenpartikel, sind vielversprechende Produkte, die für Vorgänge wie die chemische Funktionalisierung, das Mischen mit Polymeren, die Herstellung dünner Filme, die Beschichtung der Oberfläche von Festkörpern oder die Imprägnierung poröser Materialien geeignet sind. In den meisten Fällen wurden Suspensionen von Graphenpartikeln in verschiedenen Polymeren, Lösungsmitteln oder Wasser verwendet, um neue Nanokompositmaterialien auf Basis von Graphen zu erhalten.

Der beanspruchten technischen Lösung am nächsten kommt das "Verfahren zur Gewinnung von Graphen durch Hochgeschwindigkeitshomogenisierung und Hochdruckhomogenisierungsvorbehandlung" (Patent EP3190085A1). Dabei findet der Graphenproduktionsprozess in einem Hochgeschwindigkeitshomogenisator (einer Art des Dispergators) unter hohem Druck von 500 bis 3000 bar durch einen Mikrokanal mit einem Durchmesser im Mikrometerbereich statt. Als Dispersionsmedium kommen Kohlenwasserstoffe und Tenside in verschiedenen Variationen zum Einsatz.

Der Nachteil dieser Methode ist ihre sehr geringe Produktivität, die durch die Mikrometergröße des Mikrokanals begrenzt ist. Darüber hinaus ermöglicht diese Methode die Herstellung von Graphen mit wenigen Schichten nur aus thermisch expandiertem Graphit. Das Vorhandensein von Tensiden in auf diese Weise erhaltenen Suspensionen oder Dispersionen erfordert eine gründliche und langfristige Wäsche von Graphen, um Tenside zu entfernen, die die Eigenschaften von Graphen und Graphensuspensionen negativ beeinflussen.

Der Zweck der vorliegenden Erfindung besteht darin, Suspensionen oder Dispersionen von Graphen aus natürlichem oder künstlichem Flockengraphit, aus interkaliertem Graphit und aus thermisch expandiertem Graphit in verschiedenen Dispersionsmedien zu erhalten, darunter Organosiliciumflüssigkeiten, Öle, Heteropolysäuren und flüssige Verbindungen mit hohem Molekulargewicht sowie deren Lösungen und Steigerung der Produktivität und Vereinfachung des technologischen Prozesses, was eine Senkung der Kosten der Graphenproduktion mit sich bringt. Außerdem wird es mit dem vorgeschlagenen Verfahren möglich, relativ große Graphenpartikel mit einer durchschnittlichen transversalen Partikelgröße von 10 - 20 Mikrometern in Polyanilinlösungen zu erhalten, was die elektrischen Leitfähigkeitseigenschaften von Graphen verbessert.

Darüber hinaus besteht ein weiteres Problem, das durch die beanspruchte Erfindung gelöst werden soll. Es bestät darin, die Produktivität des Prozesses zur Gewinnung von Kohlenstoffnanomaterialien, insbesondere Graphen, zu steigern sowie Graphensuspensionen zusätzliche Eigenschaften zu verleihen, die eine Kontrolle ermöglichen, elektrische und thermische Eigenschaften des resultierenden Graphens festzustellen.

Dieses Problem wird durch das beanspruchte Verfahren zur Gewinnung von Graphen durch Abblättern von Graphit dadurch gelöst, dass das Abblättern von Graphen in Resonanzkammern erfolgt, in deren Hohlräumen akustische Selbstschwingungen angeregt werden. Dieser Effekt entsteht durch bestimmte geometrische Abmessungen der Resonanzkammern und deren Form, die als Ergebnis zahlreicher Experimente ermittelt wurden und mit theoretischen Berechnungen zur Erzeugung von Schallresonanzschwingungen in Flüssigkeits- oder Gasströmungen übereinstimmen, die in den Arbeiten von J. Hartmann beschrieben sind ("Der akustische Luftstrahlgenerator" Ingeniervidenskabelige skrifter, 1939, 4, 1-203.) und K. A. March. "Eine Theorie zur Funktionsweise des Hartmann-Luftstrahlgenerators". J Flüssigkeit. Mech., 1964, 20, 1, 141-159.

Das technische Ergebnis dieser Kombination von Merkmalen ist eine Steigerung der Produktivität des Prozesses zur Gewinnung sowohl von Graphen selbst als auch von Graphensuspensionen (Dispersionen) aus natürlichem Graphit, interkaliertem Graphit und thermisch expandiertem Graphit. Zusätzliche Eigenschaften von Graphensuspensionen (Dispersionen) werden durch Einbringen von Polyanilin, Organosiliciumpolymeren und einer Reihe von Heteropolysäuren in das Dispersionsmedium gebildet.

Der Kern der Erfindung ist wie folgt.
Bei der vorgeschlagenen Methode zur Gewinnung von Graphen wird der Prozess im Graphit-Peeling-Modus aufgrund der Kombination von Scherkräften und der Zerstörung von Van-der-Waals-Kräften aufgrund der Resonanzaufspaltung durchgeführt, wenn akustische Selbstschwingungen in Resonanzkammern angeregt werden, die sich auf dem Graphen befinden, nämlich Stator eines gepulsten Dispergators (Homogenisators).

Dieser Effekt ermöglicht es, die Produktivität bei der Gewinnung von Graphensuspensionen zu vervielfachen, da die Abstände zwischen Rotor und Stator sowie die Abmessungen und das Volumen der Resonanzkammern im Millimeterbereich liegen und mindestens drei Größenordnungen größer sind als die des Prototyps.

Van-der-Waals-Kräfte sind schwache Anziehungskräfte, die zwischen den Atomen und Molekülen der Materie wirken. Bei Graphit wirken zwischen den Schichten auch Van-der-Waals-Kräfte, die für die Festigkeit und Stabilität der Struktur sorgen.

Wenn in speziellen Resonanzkammern 2 akustische Schwingungen angeregt werden, erhöht sich die Schwingungsamplitude. Dies führt zu einer wiederholten Wechselwirkung zwischen den Graphitschichten, bei der die Van-der-Waals-Kräfte abzubauen beginnen.

Die Resonanzkammer 2 ist ein geschlossenes Volumen, in dem durch Änderung der Wellenlänge einer Schallwelle, die zwischen den Wänden der Kammer reflektiert wird, eine Resonanzfrequenz erzeugt wird. Dadurch werden Bedingungen für die Verstärkung der Schwingungsamplitude geschaffen, was zur Zerstörung der Van-der-Waals-Kräfte zwischen den Graphitschichten führt.

So basiert das im Patent beschriebene neue Verfahren zur Gewinnung von Graphensuspensionen auf der Zerstörung von Van-der-Waals-Kräften zwischen Graphitschichten durch Anregung akustischer Schwingungen und Erzeugung von Resonanzen in speziellen Resonanzkammern 2 auch aufgrund des hydrodynamischen Effekts, der "Kelvin-Helmholtz-Instabilität" genannt wird.

Derzeit gibt es mehrere Theorien und Modelle resonanter Systeme, auch in kontinuierlichen und elastischen Medien, unter dem allgemeinen Namen hydrodynamische Resonanz, zu der auch Suspensionen (Dispersionen) gehören.

Alle diese Modelle und Theorien sind eher empirischer Natur und hängen von vielen Faktoren ab, die keine genauen mathematischen Ergebnisse ermöglichen und die Bedingungen und den Prozess des Resonanzauftretens nur annähernd beschreiben können. Darüber hinaus müssen Kavitation und Kelvin-Helmholtz-Instabilität berücksichtigt werden.

In dieser Hinsicht basiert der Hauptteil der Arbeit und die wesentlichen Bestimmungen dieser Erfindung auf zahlreichen experimentellen Arbeiten, bei denen mathematische Modelle nur als Leitfaden herangezogen wurden.

Die experimentell gewonnenen Schlussfolgerungen und Empfehlungen widerlegen keineswegs alle bestehenden Theorien, sondern zeigen im Gegenteil die Komplexität mathematischer Berechnungen und eine Vielzahl von Faktoren, von denen die Bedingungen für das Auftreten von Resonanzen insbesondere bei der Arbeit mit Graphensuspensionen abhängen.

Alle unsere Forschungen in dieser Richtung zielen darauf ab, die Möglichkeit der Bildung von Selbstschwingungen in solch komplexen Systemen wie Dispersionen zu bestätigen, in denen Flüssigkeiten unterschiedlicher Natur als Dispersionsmedium fungieren können und Flockenmaterialien, insbesondere Graphit, dies in Dispersionsphase.

Mit unserer technischen Lösung ist es möglich, die Van-der-Waals-Kräfte auf diese Weise in nahezu jedem Flockenmaterial zu zerstören.

Unter Eigenschwingungen versteht man Schwingungen, die in einem System aufgrund seiner eigenen Trägheit und Elastizität ohne äußere Einwirkung auftreten.

Zur Beschreibung des Mechanismus der Selbstschwingungen werden verschiedene mathematische Modelle und Theorien verwendet. Eines der häufigsten Modelle ist das Van-der-Pol-Modell. Es beschreibt die Dynamik von Selbstschwingungen in nichtlinearen Systemen mit positiver Rückkopplung.

Akustische Eigenschwingungen treten in geschlossenen Gassystemen (z. B. in Rohren) auf, wenn sich Druck und Dichte im Gas ändern. Druck und Dichte ändern sich sinusförmig, wodurch Schallwellen entstehen, die von den Rohrwänden reflektiert und zum Gas zurückgeführt werden, wo die Schwingungen weiter verstärkt werden. Entspricht die Länge des Rohres einer ganzen Zahl von Halbwellen der Schallwelle, kommt es zu einer resonanten Verstärkung der Schwingungen, die zur Zerstörung des Systems führen kann.

Hydrodynamische Selbstschwingungen treten in Flüssigkeiten auf, wenn in einem geschlossenen System, beispielsweise einem Rohr oder Tank, eine Flüssigkeitsströmung stattfindet. Unter bestimmten Bedingungen kann die Strömung instabil werden und sich in Wirbel aufspalten, was wiederum zu Wellenstörungen in der Flüssigkeit führen kann. Entspricht die Länge des Rohres oder Tanks einer ganzzahligen Anzahl von Halbwellen der Wellenstörung, kommt es zu Resonanzen, die zur Zerstörung des Systems führen können.

Der Zusammenhang zwischen Eigenschwingungen und Resonanz besteht darin, dass Resonanz auftritt, wenn die Frequenz einer äußeren Störung mit der Eigenfrequenz der Eigenschwingungen des Systems übereinstimmt. Bei Resonanz ist es möglich, Schwingungen auf sehr hohe Werte zu verstärken. Das kann zur Zerstörung des Systems führen, wenn keine Maßnahmen zur Reduzierung der Schwingungsamplitude ergriffen werden.

Es gibt Bedingungen, unter denen sich das System selbst an die Resonanz anpassen kann. Dies wird als Selbstoszillation bei der Eigenfrequenz des Systems bezeichnet, wenn das System mit seiner eigenen Frequenz in Resonanz steht.

Solche Eigenschwingungen treten auf, wenn im System eine Rückkopplung vorliegt, das heißt, wenn ein Teil des Ausgangssignals des Systems seinem Eingang zugeführt wird. Dadurch werden die Schwingungen je nach Phase des Signals verstärkt oder abgeschwächt. Durch diese Rückkopplung entstehen Schwingungen mit einer bestimmten Frequenz, der Eigenfrequenz des Systems.

Die wichtigste und schwierigste Aufgabe bestand darin, die Größe und Form der Resonanzkammern in Abhängigkeit von der Rotationsgeschwindigkeit des Rotors, der Feststoffkonzentration in der Suspension und der Art des Dispersionsmediums zu bestimmen.

Die in Absatz 4 der Formel dargestellten Abmessungen der Resonanzkammern sind nicht eindeutig und dienen eher als Richtlinie für diese Methode zur Gewinnung von Graphensuspensionen.

Die wichtigste Schlussfolgerung ist, dass es bei bestimmten Abmessungen des Dispergators, der Drehzahl des Rotors und den Lücken zwischen Rotor und Stator möglich ist, die geeignete Größe der Resonanzkammern zu wählen, in denen sich das System befindet (Resonanz).

Die in den Ansprüchen angegebenen Abmessungen der Resonanzkammern wurden für dispergierte Phasen bestehend aus allen Arten von Flockengraphit ermittelt.

Die Rotordrehzahlen für eine gegebene Resonanzkammergröße wurden im Bereich von 2500 bis 4500 U/min gewählt. Bei Drehzahlen unter 2500 U/min nahm der Peelingeffekt um mehr als 10 % ab, und bei einem Drehzahlanstieg über 4500 U/min erfolgte ein starkes Mahlen von Graphenpartikeln.

Es ist bekannt, dass sich mit einer Abnahme der Graphitkristalle die technischen Eigenschaften verschlechtern. Dies wird sowohl bei der Reihe natürlicher Graphite, geordnet nach der Größe der Kristalle, als auch beim Mahlen von grobkörnigem Graphit beobachtet. In diesem Fall nimmt der Fettgehalt des Graphits ab, die Silberfarbe ändert sich zu Schwarz, die elektrische Leitfähigkeit nimmt ab, die chemische Aktivität nimmt zu usw. Bei einer Kristallgröße von weniger als 1 µm verschlechtern sich die technischen Eigenschaften so stark, dass beispielsweise Graphit ungeeignet für die Herstellung von Bleistiften wird. Beim Übergang in den Bereich der kolloidalen Dispersität gehen die technisch wertvollen Eigenschaften des Graphits vollständig verloren. (V.S. Veselovsky, "Strukturmaterialien aus Kohle und Graphit", 1966, S. 202)

Basierend auf dieser Veröffentlichung und unserer eigenen Forschung verringert eine Graphen-Partikelgröße von weniger als 10 µm die elektrischen Leitfähigkeitseigenschaften von Graphen.

Aufgrund der Besonderheiten dieser Methode zur Herstellung von Graphensuspensionen beträgt die Partikelgröße von Graphen nicht mehr als 20 µm.

Das Dispersionsmedium in Form von Organosilicium-Flüssigverbindungen ermöglicht die Herstellung von Graphendispersionen mit neuen Eigenschaften, unter anderem zur Aktivierung der Festigkeit von Nanobeton und zur Herstellung von Abschirmbeschichtungen.

Das Dispersionsmedium mit Polyanilin-Zusätzen ermöglicht die Gewinnung von Graphendispersionen, die in Form dünner elektrisch leitfähiger Nanofilme unter anderem zur Umwandlung von Sonnenenergie in elektrische Energie eingesetzt werden können.

Ein Dispersionsmedium mit Zusätzen von Heteropolysäuren ermöglicht die Gewinnung von Graphendispersionen in Form von Katalysator-Nanoträgern, sowohl für die chemische Synthese bei niedrigen Temperaturen als auch für die Umwandlung chemischer Reaktionen in Elektrizität.

Somit ermöglicht die Kombination aller aufgeführten Merkmale in der vorgeschlagenen Methode zur Gewinnung von niedrigschichtigen Graphensuspensionen die Gewinnung einer Reihe neuer graphenähnlicher Materialien mit neuen und einzigartigen Eigenschaften. Darüber hinaus ist die Herstellung von Graphensuspensionen mit dieser Methode im industriellen Maßstab möglich, und zwar mit einer Vorrichtung zur Herstellung von Graphendispersionen. Dabei ist der Pulsdispergator ein Rotations-Pulsationsgerät mit geschlossenem Kreislauf und hat ein Gehäuse mit Einlass- und Auslassdüsen. Im Gehäuse sind ein Rotor mit Beschleunigungsschaufeln und ein Stator (1) mit Resonanzkammern (2) angeordnet.

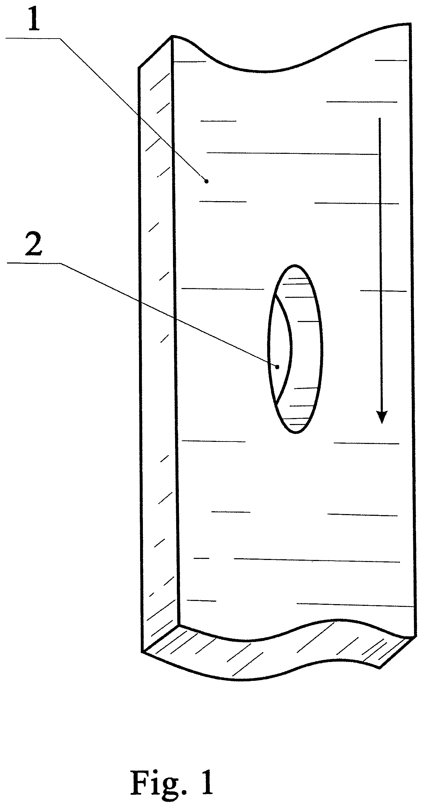

Fig.1 der Zeichnung zeigt einen Ausschnitt des Stators in Perspektive, wo
1 - Stator
2 - Resonanzkammer.

## Patentansprüche

1. Verfahren zur Herstellung von Graphensuspensionen,
**dadurch gekennzeichnet,**
**dass** zur Steigerung der Produktivität der Exfoliationseffekt durch die Zerstörung von Van-der-Waals-Kräften bei der resonanten Aufspaltung der Dispersionsphase durch die Anregung akustischer Eigenschwingungen Hohlräume von Resonanzkammern (2) entstehen.

2. Verfahren zur Gewinnung von Graphensuspensionen nach Anspruch 1,
**dadurch gekennzeichnet,**
**dass** die Bedingungen zur Anregung akustischer Eigenschwingungen in den Resonanzkammern (2) des gepulsten Dispergators geschaffen werden, die sich an seinem Stator (1) befinden.

3. Verfahren zur Herstellung von Graphensuspensionen nach den Ansprüchen 1 und 2,
**dadurch gekennzeichnet,**
**dass** die Resonanzkammern (2) überwiegend längliche Ovale oder eine Gruppe von Ovalen sind, deren Längsachsen in Bewegungsrichtung des Impulsdispergatorrotors liegen.

4. Verfahren zur Herstellung von Graphensuspensionen nach den Ansprüchen 1 bis 3,
**dadurch gekennzeichnet,**
**dass** die durchschnittliche Breite der Resonanzkammer (2) im Bereich von 3 - 8 mm liegt und die Länge der Resonanzkammer mindestens dreimal größer sein muss als die Breite, jedoch nicht mehr als siebenmal.

5. Verfahren zur Herstellung von Graphensuspensionen nach den Ansprüchen 1 bis 4,
**dadurch gekennzeichnet,**
**dass** die Rotationsgeschwindigkeit des Pulsdispergatorrotors im Bereich von 2500 bis 4500 U/min. liegt.

6. Verfahren zur Herstellung von Graphensuspensionen nach Anspruch 1,
**dadurch gekennzeichnet,**
**dass** das Dispersionsmedium in diesem Verfahren Wasser oder wässrige Lösungen verschiedener Mineral- und Organomineralsalze sein kann.

7. Verfahren zur Herstellung von Graphensuspensionen nach Anspruch 1,
**dadurch gekennzeichnet,**
**dass** als dispergierte Phase jeder der aufgeführten Graphite verwendet werden kann: natürlicher Flockengraphit, synthetischer Graphit, interkalierter Graphit und thermisch expandierter Graphit oder Kombinationen davon.

8. Verfahren zur Herstellung von Graphensuspensionen nach den Ansprüchen 1 bis 7,
**dadurch gekennzeichnet,**
**dass** die durchschnittliche Graphen-Partikelgröße (Quergröße) 10 - 20 Mikrometer beträgt.

9. Verfahren zur Herstellung von Graphensuspensionen nach den Ansprüchen 1 bis 7,
**dadurch gekennzeichnet,**
**dass** als Dispersionsmedium Organosilicium-Flüssigverbindungen und deren Lösungen verwendet werden können.

10. Verfahren zur Herstellung von Graphensuspensionen nach den Ansprüchen 1 bis 7,
**dadurch gekennzeichnet,**
**dass** Polyanilinlösungen als Dispersionsmedium verwendet werden können.

11. Verfahren zur Herstellung von Graphensuspensionen nach den Ansprüchen 1 bis 7,
**dadurch gekennzeichnet,**
**dass** als Dispersionsmedium Lösungen von Heteropolysäuren beliebiger Reihenfolge und beliebiger Kombination fungieren können, die keinen unlöslichen Niederschlag des Dispersionsmediums ergeben.

12. Vorrichtung zur Herstellung von Graphendispersionen nach einem der Ansprüche 1 bis 11,
**dadurch gekennzeichnet,**
**dass** der Pulsdispergator ein Rotations-Pulsationsgerät mit geschlossenem Kreislauf ist und ein Gehäuse mit Einlass- und Auslassdüsen aufweist, in dem ein Rotor mit Beschleunigungsschaufeln und ein Stator (1) mit Resonanzkammern (2) angeordnet sind.
